Europäisches Patentamt

European Patent Office

Office européen des brevets

(19)

(11) EP 0 653 619 B1

(12) FASCICULE DE BREVET EUROPEEN

(45) Date de publication et mention
de la délivrance du brevet:
**15.09.1999 Bulletin 1999/37**

(51) Int Cl.6: **G01N 15/08**

(21) Numéro de dépôt: **94402500.6**

(22) Date de dépôt: **04.11.1994**

(54) **Procédé et dispositif pour mesurer le volume poreux d'un échantillon solide**

Methode und Vorrichtung zur Messung des Porenvolumens einer festen Probe

Method and device for measuring the pore volume of a solid sample

(84) Etats contractants désignés:
**DE GB NL**

(30) Priorité: **17.11.1993 FR 9313817**

(43) Date de publication de la demande:
**17.05.1995 Bulletin 1995/20**

(73) Titulaire: **INSTITUT FRANCAIS DU PETROLE**
**92502 Rueil-Malmaison (FR)**

(72) Inventeurs:
  • **Ajot, Hubert**
    **F-92500 Rueil Malmaison (FR)**
  • **Garnier, Dominique**
    **F-78630 Orgeval (FR)**
  • **Russmann, Colette**
    **F-95600 Eaubonne (FR)**
  • **Gonzalez, Pierre**
    **F-92500 Rueil Malmaison (FR)**
  • **Brandely, José**
    **F-91600 Savigny Sur Orge (FR)**

(74) Mandataire: **Andreeff, François**
**INSTITUT FRANCAIS DU PETROLE**
**4, avenue de Bois-Préau**
**92502 Rueil-Malmaison (FR)**

(56) Documents cités:
EP-A- 0 201 118          GB-A- 2 016 709
US-A- 4 524 605

## Description

La présente invention concerne un procédé et un appareil de mesure en continu de l'intrusion du mercure dans un solide poreux. Elle peut concerner aussi l'extrusion du mercure de ce solide. Elle concerne aussi l'utilisation de cet appareil dans un procédé de mesure du volume poreux d'un matériau.

La caractérisation des solides par la mesure du volume poreux intéresse plusieurs domaines industriels importants tels la catalyse et l'adsorption, l'étude des roches réservoirs, des minerais, des charbons, l'industrie des ciments et des bétons, des céramiques, des polymères et plus généralement tous les corps présentant une macroporosité, une mésoporosité et/ou éventuellement une microporosité.

Le volume poreux d'un solide et sa distribution poreuse répondent à la loi de Kelvin pour un liquide non mouillant. Lorsqu'un liquide non mouillant, le mercure par exemple, pénètre dans un capillaire de rayon r, la force qui s'oppose à sa pénétration est :

$$F = 2\pi \, r \, Y \cos \theta$$

Y = tension superficielle
θ = angle de contact du liquide avec la paroi du solide

Si l'on force la pénétration en appliquant au liquide une pression P, le capillaire ou le pore se remplira dès que $\pi \, r^2 \, P = 2 \, \pi \, r \, Y \cos \theta$ soit :

$$P = \frac{-2 \, Y \cos \theta}{r}$$

Y = 485 dynes cm$^{-1}$ à 20°C
θ varie entre 110 et 160° en fonction du matériau.

Le principe de la mesure est une application de cette formule. Toute pression supérieure à celle déterminée pour des pores de rayon r entraîne la pénétration de mercure dans les pores de rayon r.

Les porosimètres commerciaux permettent d'atteindre des pressions de l'ordre de 5. 10$^2$ MPa correspondant à des diamètres de pores de 30 Å.

L'art antérieur est illustré par les demandes de brevets EP-A-0 201 118 et GB-A-2 016 709.

Les appareils les plus couramment utilisés (US-3 882 714, US-3 371 519, US-3 371 520 et US-4 524 605) comportent des porte-échantillons munis d'un capillaire rempli de mercure, qui sont plongés dans un bain d'un fluide de compression. Ce fluide de compression mis en oeuvre par une pompe applique une pression croissante sur la colonne capillaire. La variation du niveau de mercure dans le capillaire en fonction de la pression est suivie par un détecteur à capacitance. Pour ce type de mesure, le capillaire doit être revêtu d'un chemisage total ou partiel coûteux et fragile, de l'Inconel par exemple, qui s'altère assez facilement et fausse les mesures. Par ailleurs, la poussée du mercure par un fluide intermédiaire induit d'autres sources d'erreurs inhérentes notamment au facteur de compressibilité du fluide, qui est important. Enfin, la montée en pression s'effectue par paliers, de sorte que l'équilibre thermodynamique n'est pas toujours respecté, ce qui est préjudiciable à la qualité de la mesure.

Un des objets de l'invention est de remédier à ces inconvénients.

Un autre objet de l'invention est d'introduire le mercure de manière continue et de façon sensiblement constante dans les pores du solide à examiner, de telle sorte que l'équilibre thermodynamique soit sensiblement respecté à tout instant.

Il a été mis au point un procédé et un dispositif simple, fiable, peu coûteux et facile à mettre en oeuvre, qui permet d'obtenir avec une bonne précision une courbe, image de la montée en pression dans le porte-échantillon en fonction du temps, avec une excellente répétabilité.

Par ailleurs, le procédé et le dispositif selon l'invention nécessitent des porte-échantillons de très faible coût.

De manière générale, l'invention concerne un procédé d'intrusion par le mercure d'un échantillon poreux comprenant :

a) une étape de mesure de la compressibilité du mercure et des divers éléments à volumes variables, ainsi que de l'élasticité des matériaux, dans des conditions appropriées de programmation de débit d'injection de mercure dans un porte-échantillon vide ;

b) une étape de mesure en présence d'un échantillon, dans des conditions identiques à celles de l'étape précédente ;

c) une étape de comparaison des deux courbes obtenues précédemment .

Les étapes de mesure proprement dites a) et b) consistent à mesurer avec une très grande précision le déplacement de la seringue de la pompe proprement dite, ce qui conduit à la mesure du volume de mercure introduit dans les pores du solide en fonction du temps. Cette mesure est réalisée dans des intervalles de temps pouvant atteindre la fraction de seconde. Conjointement, les mesures de montée en pression, en fonction du temps sont assurées par 1 ou 2 capteurs couvrant des gammes de pression, par exemple de 1 à 100 bar soit 10$^5$ Pascal à 10$^7$ Pascal et de 1 à 4500 bar soit 10$^5$ Pascal à 4,5.10$^2$. MPa. Les mesures sont également faites dans des intervalles de temps pouvant atteindre la fraction de seconde, c'est-à-dire pratiquement en continu.

De manière plus précise, l'invention concerne un procédé pour déterminer des mesures de volume poreux par porosimètrie sur un échantillon solide caractérisé en ce qu'on réalise les étapes suivantes :

a) on remplit un porte-échantillon vide d'un liquide non mouillant ayant un taux de compressibilité inférieur ou égal à celui du mercure, tel que le mercure,

b) on place le porte-échantillon dans une enceinte d'une cellule haute pression, l'enceinte communiquant avec le porte-échantillon,

c) on remplit dudit liquide l'enceinte de la cellule haute pression par un moyen de pompage approprié,

d) on isole l'enceinte remplie,

e) on programme un débit sensiblement constant d'introduction dudit liquide dans l'enceinte de la cellule par le moyen de pompage pendant une période de temps déterminée, et on en déduit le volume de liquide introduit à chaque instant,

f) on mesure la pression correspondant au volume de liquide introduit à chaque instant de ladite période de temps,

g) on vide le porte-échantillon,

h) on y introduit un poids connu d'échantillon et on le remplit dudit liquide,

i) on place le porte-échantillon dans l'enceinte de la cellule haute pression,

j) on répète les étapes c), d) et e) en présence de l'échantillon dans le porte-échantillon,

k) on mesure la pression correspondant au volume de liquide introduit dans l'enceinte de la cellule contenant l'échantillon à chaque instant de ladite période de temps, et

l) on détermine, par des moyens de traitement appropriés, à chaque instant, pour chaque mesure de pression obtenue selon les étapes f) et k) le volume de liquide introduit dans l'échantillon par unité de poids et on en déduit des mesures de volume poreux de l'échantillon par unité de poids.

Il est bien entendu qu'à chaque valeur de la pression correspond selon la loi de Kelvin une valeur de rayon de pores.

Le liquide non mouillant ayant un taux de compressibilité inférieur ou égal à celui du mercure, est de préférence le mercure.

Selon une caractéristique du procédé, on peut programmer un débit constant d'introduction de liquide non mouillant dans renceinte de la cellule haute pression avec et sans échantillon d'au moins $10^{-4}$ mm$^3$.s$^{-1}$ et de préférence entre $1,5 \times 10^{-3}$ mm$^3$.s$^{-1}$ et $1$ mm$^3$.s$^{-1}$. Les pompes seringue sont particulièrement adaptées à délivrer ces débits de manière régulière et avec précision.

Dans ces conditions on considère que l'on respecte l'équilibre thermodynamique.

Selon une autre caractéristique, on peut effectuer des mesures à l'aide de capteurs de pression, à des intervalles de temps inférieurs à 5 secondes et de préférence inférieurs à la seconde. On peut de cette façon obtenir selon le temps de réponse des capteurs 2000 à 5000 points de mesure pendant une période de temps d'une vingtaine de minutes par exemple.

Il est bien entendu qu'à partir des mesures de volume poreux d'un échantillon, on peut également en déduire par des moyens de traitement appropriés un histogramme de distribution de la taille des pores de cet échantillon.

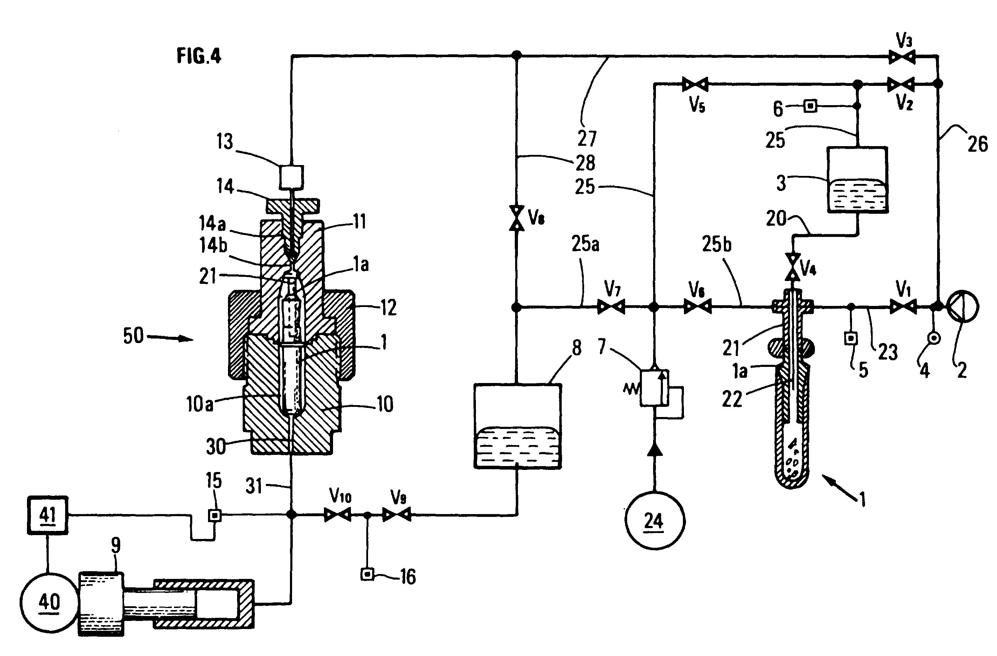

L'invention concerne par ailleurs un dispositif de mesure du volume poreux d'un échantillon solide. Il comporte, de manière générale, (Fig. 4) une cellule (50) haute pression sensiblement étanche comprenant une enceinte (10a), un porte-échantillon (1) muni d'un bouchon comportant un tube (21) ouvert à ses deux extrémités et de diamètre approprié, le porte échantillon étant maintenu dans ladite enceinte et communiquant avec elle par ledit tube, des moyens (2) de mise sous vide connectés à ladite enceinte, des moyens (8) d'alimentation en liquide non mouillant tel que le mercure reliés à l'enceinte. Le dispositif est caractérisé en ce qu'il comprend des moyens de pompage (9) adaptés à délivrer ledit liquide sous pression connectés à l'enceinte et aux moyens d'alimentation en liquide, des moyens de programmation (40) de débit constant d'alimentation en liquide durant une période de temps déterminé reliés à la pompe, au moins un capteur de pression (15) en aval des moyens de pompage adapté à lire la pression à chaque instant, des moyens (41) de saisie et de traitement des signaux reliés au capteur de pression et aux moyens de programmation de débit d'alimentation en liquide et adaptés à déterminer des mesures de volume poreux.

Selon une variante du dispositif, la cellule peut comporter deux orifices (30, 14 b), dont l'un (30) assure la communication entre l'enceinte et les moyens de pompage, et un bouchon (14) comportant un tube (14a) adapté soit à mettre en communication le second orifice (14b) avec l'enceinte et un vase (13) d'expansion dudit liquide, soit à assurer la fermeture du second orifice.

Selon une autre variante du dispositif, la cellule peut comporter un seul orifice (30) qui met en communication l'enceinte (1a) soit avec les moyens (4) de pompage, soit avec les moyens (2) de mise sous vide, au moyen d'une vanne appropriée entre les moyens de pompage et l'orifice.

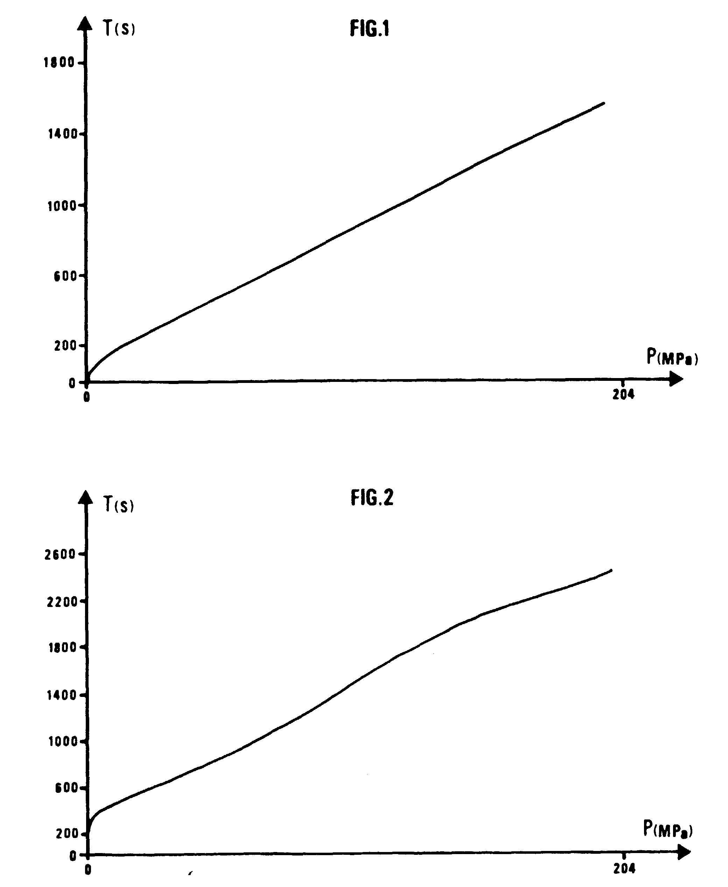

L'invention sera mieux comprise au vu de la figure 4 qui illustre de manière schématique un dispositif de mise en oeuvre du procédé, et des autres figures 1 à 3 qui montrent respectivement la courbe de la pression en fonction du temps, dans une cellule sans échantillon, puis avec échantillon, et enfin la courbe du volume de mercure introduit en fonction de la taille des pores.

Le dispositif comprend un porte-échantillon 1 en verre, positionné dans un poste basse pression et relié à un réservoir de mercure (3) par une ligne (20) sur laquelle est montée une vanne V4. Ce porte-échantillon comporte dans sa partie supérieure un bouchon (1a) rodé en verre comprenant un tube (21) ouvert à ses deux extrémités qui est relié à la ligne (20) par une aiguille (22) de remplissage. Pour déterminer des mesures de volume poreux de poudres, il est préférable que l'espace annulaire entre la paroi du porte-échantillon et le tube (21) ait un volume au moins égal à celui de la poudre.

D'autre part la partie supérieure du tube est connectée à une pompe à vide (2), équipée d'une jauge à vide (4), par une ligne (23) munie d'une vanne V1.

La pompe à vide (2) équipée d'une jauge à vide (4) réalise le vide soit dans une cellule haute pression (50) par des lignes (26 et 27) comportant une vanne V3, soit dans le porte-échantillon (1) par une ligne (23) contrôlée par une vanne V1 et un capteur de pression (5), soit dans les réservoirs de mercure (3 et 8) par les lignes (26, 25) et la vanne V2 ou les lignes (26, 27, 28) et les vannes V3, V8.

La cellule haute pression (50) comprend un corps de cellule (10) en inox adapté à résister à de très fortes pressions, (4,5 x 10$^2$ MPa) et dans lequel est disposée une enceinte (10a) pour loger le porte-échantillon (1). Ce corps de cellule est surmonté d'un bouchon (11) fermant le corps de cellule (10) grâce à un écrou (12) et des joints d'étanchéité (non représentés sur la figure). Le porte-échantillon maintenu dans cette enceinte (10a) par des ergots appropriés, comprend dans sa partie supérieure le bouchon (1a) muni du tube (21) mentionné ci-avant. La partie supérieure de l'enceinte (10a) dans laquelle débouche le tube (21) est reliée par un orifice (14b) et par un bouchon (14) moleté à étanchéité conique comportant un tube (14a) ouvert à ses extrémités, à un vase d'expansion transparent (13). Ce vase d'expansion est lui même connecté par une ligne (27) contrôlée par une vanne V3 à la pompe à vide (2). Le vase d'expansion est par ailleurs relié à un réservoir de mercure (8) par une ligne (28) munie d'une vanne V8.

Pour prévenir l'oxydation du mercure lors de la détente à la pression atmosphérique, de l'azote est envoyé du réservoir (24) dans le réservoir (8) ou dans le vase d'expansion (13) par des lignes (25a et 28) contrôlées par des vannes V8 et V7, dans le porte-échantillon (1) par les lignes (25 et 25b) contrôlées par une vanne V6 ou dans le réservoir (3) par la ligne (25) équipée de la vanne V5. Une vanne de régulation (7) reliée au réservoir d'azote (24) contrôle la pression des diverses lignes.

À la partie inférieure de l'enceinte (10a) un autre capillaire (30) permet la liaison par une ligne (31) avec une pompe seringue (9) haute pression (type NOVA SWISS). Cette pompe est elle-même remplie de mercure par l'intermédiaire du réservoir à mercure (8) sous le contrôle de vannes V9 et V10 et de capteurs de pression (15 et 16).

Des soupapes de sécurité non mentionnées sur la figure sont par ailleurs disposées sur l'installation pour la protéger.

De plus, des moyens de programmation (40) des différents paramètres de la pompe seringue, assurent la montée en pression ou le débit d'introduction du mercure dans la cellule de mesure.

Enfin, des moyens (41) de saisie et de traitement des informations sont adaptés à saisir et traiter les signaux de pression émis par les capteurs de pression (15 et 16) et de volume de mercure, délivrés en fonction du temps par les moyens (40).

Toute mesure est précédée d'une mise sous vide (< 1 Pa) de l'ensemble de l'appareil afin d'éliminer des traces d'air.

Une mesure de porosité est réalisée en deux étapes :

1) mesure du blanc d'un porte-échantillon donné dans la cellule haute pression (50). Cette mesure est faite une seule fois, les paramètres sont stockés. Un contrôle peut être assuré à intervalle régulier.

2) Mesure de la porosité d'un échantillon solide.

1. Mesure du blanc

   1.1 Basse pression
   Le porte-échantillon (1) est totalement vide. Il est positionné sur le poste basse pression. On fait le vide dans le porte-échantillon (1) et sur le mercure du réservoir (3) par la pompe à vide (2). La valeur du vide, inférieur à 1 Pa, est lue sur la jauge à vide (4), saisie par l'ordinateur. Les vannes V1 et V2 permettent de réaliser le vide sur l'ensemble basse pression. Cette opération terminée, on ouvre la vanne V4, et conjointement par la vanne V5 on amène le réservoir à une pression fixée comprise entre 1.10$^5$ et 1,5.10$^5$ Pa à l'aide du circuit d'azote (24, 25, V5) régulé par le régulateur de pression (7) couplé au capteur de pression (6). Le mercure est alors transféré du réservoir (3) vers le porte-échantillon (1). Le porte-échantillon est rempli de mercure, la vanne V4 est fermée et par la vanne V6 le porte-échantillon est amené à une pression fixée comprise entre 1.10$^5$ et 1,5.10$^5$ Pa à l'aide du circuit d'azote régulé.

   1.2 Haute pression

Le vide est préalablement réalisé dans la cellule (50) haute pression (HP), la pompe seringue (9) connectée à la cellule HP (50) est à son origine, remplie de mercure par la vanne V9 et le réservoir à mercure (8).

L'enceinte (10a) est remplie sensiblement à la moitié de son volume par le mercure provenant de (8) par V9.

Le porte-échantillon rempli de mercure est alors positionné dans l'enceinte (10a) de la cellule (50). Le bouchon (11) et l'écrou (12) ferment la cellule HP. On fait à nouveau le vide par V3 sur l'ensemble haute pression et l'on active la pompe seringue (9). Le mercure remplit l'enceinte (10a) de la cellule HP et débouche dans un récipient d'expansion (13) transparent.

Le vide est coupé, une pression d'azote est appliquée en (13) comprise entre $1.10^5$ et $1,5.10^5$ Pa, la pompe seringue est stoppée.

On isole la cellule HP des circuits basse pression par un bouton moleté à étanchéité conique (14). Le point origine de la pompe pour la mise en pression est repéré, saisi et stocké ainsi que la valeur du ou des capteur(s) haute pression (15 et 16).

Le débit de la pompe est fixé par exemple à 0,015 cm$^3$ min$^{-1}$ et la montée en pression est saisie par 4 à 5000 points de mesure.

La mesure du blanc ainsi déterminée pour un porte-échantillon donné est stockée dans la mémoire de l'ordinateur. La reproductibilité d'une telle mesure est bonne soit ± 0,5 %.

## 2. Mesure du volume poreux d'un échantillon solide

La mesure du volume poreux d'un échantillon est réalisée dans un porte-échantillon dont le blanc a été évalué.

Cette mesure procède du même protocole que celle ayant conduit au "blanc".

### 2.1 Basse pression

On pèse dans le porte-échantillon une certaine quantité d'échantillon solide préalablement prétraité. Ensuite, on remplit le porte-échantillon de mercure suivant le protocole 1.1.

Cette opération terminée, on pèse le porte-échantillon contenant l'échantillon dont on doit évaluer la porosité, rempli de mercure.

La différence de poids entre le même porte-échantillon sans solide et avec le solide donne accessoirement le volume occupé par un poids connu d'échantillon et conduit donc à la densité de grain du solide considéré.

### 2.2 Haute pression

Le porte-échantillon est alors disposé dans la cellule de mesure haute pression. Le protocole est le même que celui suivi lors de la détermination du blanc en haute pression.

Ceci nous conduit à 2 tableaux de valeurs : pressions, volumes introduits ou déplacés, temps. La différence point à point conduit au volume de mercure introduit dans le solide à une pression déterminée croissante et de manière sensiblement continue. Le nombre de points d'acquisition (2000 à 5000 points par exemple) est limité par le temps de réponse du capteur (10 ms par exemple).

L'utilisation la plus courante de l'appareil selon l'invention est l'étude de la structure poreuse des matériaux par intrusion d'un liquide non mouillant, par exemple le mercure, dans les pores des solides (voir par exemple "Adsorption, Surface Area and Porosity" S.J. GREGG et K.S.W. SING, Academic Press Inc., 2nd edition 1982).

L'exemple suivant illustre l'invention, sans pour autant en limiter la portée.

On se propose de mesurer, à l'aide de l'appareil selon l'invention, le volume poreux d'un échantillon d'alumine par intrusion de mercure dans ses pores.

### Prétraitement

Une certaine quantité du solide en poudre ou en grain, billes etc. a été prétraité dans une étuve à 250°C pendant 12 heures afin de le débarrasser des impuretés (eau par exemple) qu'il contenait.

### Mesure du blanc du porte-échantillon

La mesure du blanc du porte-échantillon est réalisée suivant le protocole décrit en 1.1 et 1.2 soit un débit de mercure de 0,015 mm$^3$.s$^{-1}$ avec un temps de scrutation de 0,5 seconde. La pression atteinte est de 200 MPa. Cela conduit à un tableau exprimant le temps donc le volume de mercure déplacé par la pompe seringue en fonction de la pression. Le volume déplacé comprend la compressibilité du mercure, des joints et la dilatation des matériaux en présence. La mesure du blanc est visualisée par la courbe de la Fig 1. La reproductibilité de la mesure est meilleure que 0,5 %.

### Mesure

L'échantillon d'alumine g de surface spécifique d'environ 100 m$^2$/g (Rhône -Poulenc) représentant 339 mg est pesé dans la cellule ayant fait l'objet du blanc ; le protocole de mesure en (2.1 et 2.2) conduit également à un tableau de valeurs : temps donc volume de mercure introduit dans les pores, pressions, diamètre des pores par application de la loi de Kelvin (Fig. 2).

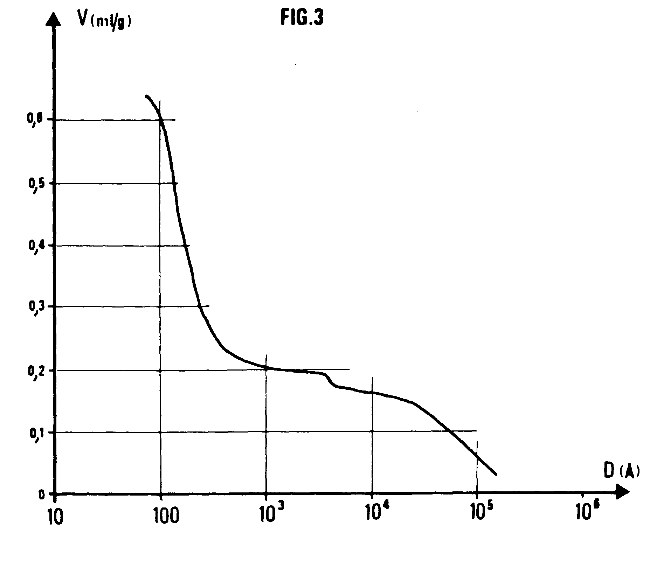

De chacune des valeurs de volume introduit en fonction de la pression, on déduit par calcul les valeurs correspondant à la mesure du blanc. Ceci conduit à un nouveau tableau de valeurs du volume de mercure exprimé en millilitres par gramme d'échantillon introduit dans les pores du solide en fonction de la pression donc du diamètre des pores (Fig. 3) exprimé en angstroms (1 Å = 10⁻¹⁰m).

Cet exemple a été réalisé à 2.10² MPa.

Il est bien entendu que l'on peut déterminer aussi, lors de la détente à la pression atmosphérique, le volume de mercure déplacé de l'échantillon vers la pompe seringue en fonction de la chute de pression et d'en déduire le volume de mercure retenu dans les pores. Cette mesure permet d'émettre des hypothèses sur la taille ou la forme des pores.

## Revendications

1. Dispositif pour déterminer des mesures de volume poreux d'un échantillon solide comportant une cellule (50) haute pression sensiblement étanche comprenant une enceinte (10a), un porte-échantillon (1) muni d'un bouchon comportant un tube (21) ouvert à ses deux extrémités et de diamètre approprié, le porte-échantillon étant maintenu dans ladite enceinte et communiquant avec elle par ledit tube, des moyens (2) de mise sous vide connectés à la dite enceinte, des moyens (8) d'alimentation en liquide non mouillant tel que le mercure reliés à l'enceinte, le dispositif étant caractérisé en ce qu'il comprend des moyens de pompage (9) adaptés à délivrer ledit liquide sous pression connectés à l'enceinte et aux moyens d'alimentation en liquide, des moyens de programmation (40) de débit constant d'alimentation en liquide durant une période de temps déterminée reliés à la pompe, au moins un capteur de pression (15) en aval des moyens de pompage adapté à lire la pression à chaque instant, des moyens (41) de saisie et de traitement des signaux reliés au capteur de pression et aux moyens de programmation de débit d'alimentation en liquide et adaptés à déterminer des mesures de volume poreux de l'échantillon.

2. Dispositif selon la revendication 1, dans lequel la cellule comporte deux orifices (30, 14b) dont l'un (30) assure la communication entre l'enceinte et les moyens de pompage, et un bouchon (14) comportant un tube (14a) adapté soit à mettre en communication le second orifice (14b) avec l'enceinte et un vase (13) d'expansion dudit liquide, soit à assurer la fermeture du second orifice.

3. Dispositif selon la revendication 1, dans lequel la cellule comporte un seul orifice (30) qui met en communication l'enceinte (10a) soit avec les moyens (4) de pompage, soit avec les moyens (2) de mise sous vide, au moyen d'une vanne appropriée entre les moyens de pompage et l'orifice.

4. Dispositif selon l'une des revendications 1 à 3, dans lequel le porte-échantillon comporte un bouchon (1a) rodé comprenant un tube (21) de faible diamètre ouvert à ses deux extrémités, et des moyens de maintien dans l'enceinte.

5. Dispositif selon l'une des revendications 1 à 4 dans lequel les moyens de pompage sont une pompe seringue.

6. Procédé pour déterminer des mesures de volume poreux par porosimètrie sur un échantillon solide caractérisé en ce qu'on réalise les étapes suivantes :

a) on remplit un porte-échantillon vide d'un liquide non mouillant ayant un taux de compressibilité inférieur ou égal à celui du mercure, tel que le mercure,

b) on place le porte-échantillon dans une enceinte d'une cellule haute pression, l'enceinte communiquant avec le porte-échantillon,

c) on remplit dudit liquide l'enceinte de la cellule haute pression par un moyen de pompage approprié,

d) on isole l'enceinte remplie,

e) on programme un débit sensiblement constant d'introduction dudit liquide dans l'enceinte de la cellule par le moyen de pompage pendant une période de temps déterminée, et on en déduit le volume de liquide introduit à chaque instant,

f) on mesure la pression correspondant au volume de liquide introduit à chaque instant de ladite période de temps,

g) on vide le porte-échantillon,

h) on y introduit un poids connu d'échantillon et on le remplit dudit liquide,

i) on place le porte-échantillon dans l'enceinte de la cellule haute pression,

j) on répète les étapes c), d) et e) en présence de l'échantillon dans le porte-échantillon,

k) on mesure la pression correspondant au volume de liquide introduit dans l'enceinte de la cellule contenant l'échantillon à chaque instant de ladite période de temps, et

l) on détermine, par des moyens de traitement appropriés, à chaque instant, pour chaque mesure de pression obtenue selon les étapes f) et k) le volume de liquide introduit dans l'échantillon par unité de poids et on en déduit des mesures de volume poreux de l'échantillon par unité de poids.

**7.** Procédé selon la revendication 6, dans lequel on programme un débit constant d'introduction de liquide dans l'enceinte de la cellule haute pression avec et sans échantillon d'au moins $1 \times 10^{-4}$ mm$^3$.s$^{-1}$ et de préférence compris entre $1,5 \times 10^{-3}$ mm$^3$.s$^{-1}$ et $1$ mm$^3$.s$^{-1}$.

**8.** Procédé selon l'une des revendications 6 à 7 dans lequel on mesure la pression à des intervalles de temps inférieur à 5 secondes et de préférence inférieur à la seconde.

**9.** Procédé selon l'une des revendications 6 à 8 dans lequel le liquide non mouillant est le mercure.

**10.** Procédé selon l'une des revendications 6 à 9 dans lequel le moyen de pompage est une pompe seringue.

**11.** Utilisation du dispositif selon l'une des revendications 1 à 5 pour la mesure du volume poreux d'un catalyseur, d'une roche, d'un ciment ou de matières céramiques.

**Patentansprüche**

**1.** Vorrichtung zur Bestimmung der Messungen porösen Volumens einer festen Probe mit einer Zelle (50) hohen Drucks, die im wesentlichen dicht ist, umfassend: eine Kammer (10a), einen Probenträger (1), versehen mit einem Stopfen, der ein Rohr (21) aufweist, und an seinen beiden Enden offen und von geeignetem Durchmesser ist, wobei der Probenträger in dieser Kammer gehalten ist und mit ihr über dieses Rohr in Verbindung steht, Mittel (2), um Vakuum zu erzeugen, die mit dieser Kammer verbunden sind, Mittel (8) zur Speisung einer nicht benetzenden Flüssigkeit wie Quecksilber, die mit der Kammer verbunden sind, wobei die Vorrichtung sich dadurch auszeichnet, daß sie Pumpmittel (9) umfaßt, die so ausgelegt sind, daß sie diese Flüssigkeit unter Druck liefern und mit der Kammer und mit Flüssigkeitszuführungsmitteln verbunden sind, Programmierungsmittel (40) für konstanten Speisedurchsatz mit Flüssigkeit während einer bestimmten zeitlichen Periode, die mit der Pumpe verbunden sind, wenigstens einem Druckgeber (15) hinter den Pumpmitteln, der so ausgelegt ist, daß er den Druck in jedem Augenblick liest, Mittel (41) zur Erfassung und zur Behandlung von Signalen, die mit dem Druckgeber und mit den Programmierungsmitteln für den Speisedurchsatz mit Flüssigkeit verbunden und so ausgelegt sind, daß sie Messungen porösen Volumens der Probe bestimmen.

**2.** Vorrichtung nach Anspruch 1, bei der die Zelle zwei Öffnungen (30, 14b) umfaßt, von denen die eine (30) die Verbindung zwischen der Kammer und den Pumpmitteln und einem Stopfen (14), der ein Rohr (14a) umfaßt, herstellt, eine Auslegung derart, daß entweder die zweite Öffnung (14b) mit der Kammer und einem Expansionsgefäß (13) für diese Flüssigkeit in Verbindung gesetzt wird oder für das Schließen der zweiten Öffnung gesorgt wird.

**3.** Vorrichtung nach Anspruch 1, bei der die Zelle eine einzige Öffnung (30) umfaßt, die die Kammer (10a) entweder mit den Pumpmitteln (4) oder mit den Vakuumaufbringungsmitteln (2) in Verbindung setzt, und zwar mittels eines geeigneten Schiebeventils zwischen den Pumpmitteln und der Öffnung.

**4.** Vorrichtung nach einem der Ansprüche 1 bis 3, bei der der Probenträger einen geschliffenen Stopfen (1a) umfaßt, der ein Rohr (21) geringen Durchmessers aufweist, das an seinen beiden Enden offen ist sowie Mittel, um in der Kammer gehalten zu werden.

**5.** Vorrichtung nach einem der Ansprüche 1 bis 4, bei der die Pumpmittel eine Spritzenpumpe sind.

**6.** Vorrichtung zur Bestimmung der Messungen von Porenvolumina hinsichtlich der Porosymetrie an einer festen Probe, dadurch gekennzeichnet, daß die folgenden Stufen realisiert werden:

a) man füllt einen hohlen Probenträger mit einer nichtbenetzenden Flüssigkeit, der ein Kompressibilitätsverhältnis von weniger oder gleich dem des Quecksilbers hat, beispielsweise Quecksilber,

b) man ordnet den Probenträger in einer Kammer einer Hochdruckzelle ein, wobei die Kammer mit dem Probenträger in Verbindung steht,

c) man füllt mit dieser Flüssigkeit die Kammer der Hochdruckzelle über ein geeignetes Pumpmittel,

d) man isoliert die gefüllte Kammer,

e) man programmiert eine im wesentlichen konstante Einführungsmenge dieser Flüssigkeit in diese Kammer der Zelle, durch die Pumpmittel über eine bestimmte zeitliche Periode, und man leitet hieraus das in jedem Augenblick eingeführte Flüssigkeitsvolumen ab,

f) man mißt den Druck entsprechend dem Volumen der in jedem Augenblick dieser zeitlichen Periode eingeführten Flüssigkeit,

g) man leert den Probenträger,

h) man führt hierin ein bekanntes Probengewicht ein und füllt es mit dieser Flüssigkeit,

i) man ordnet den Probenträger in der Kammer der Hochdruckzelle an,

j) man wiederholt die Stufen c), d) und e) in Anwesenheit der Probe in dem Probenträger,

k) man mißt den Druck entsprechend dem Flüssigkeitsvolumen, das in die Kammer der die Probe enthaltenden Zelle eingeführt ist oder eingeführt wird in jedem Augenblick dieser zeitlichen Periode und

l) man bestimmt über geeignete Verarbeitungsmittel in jedem Augenblick für jede nach den Stufen f) und k) erhaltene Druckmessung, das in die Probe pro Gewichtseinheit eingeführte Flüssigkeitsvolumen, und man leitet hieraus Messungen porösen Volumens der Probe pro Porenvolumen her.

7. Verfahren nach Anspruch 6, bei dem man einen konstanten Einführungsdurchsatz für Flüssigkeit in die Kammer der Hochdruckzelle mit und ohne Probe von wenigstens $1 \times 10^{-4}$ mm$^3$.s$^{-1}$ und bevorzugt zwischen $1{,}5 \times 10^{-3}$ mm$^3$.s$^{-1}$ und 1 mm$^3$s.$^{-1}$ programmiert.

8. Verfahren nach einem der Ansprüche 6 bis 7, bei dem man den Druck in Zeitintervallen von weniger als 5 Sekunden und bevorzugt weniger als 1 Sekunde mißt.

9. Verfahren nach einem der Ansprüche 6 bis 8, bei dem die nicht benetzende Flüssigkeit Quecksilber ist.

10. Verfahren nach einem der Ansprüche 6 bis 9, bei dem das Pumpmittel eine Spritzenpumpe ist.

11. Verwendung der Vorrichtung nach einem der Ansprüche 1 bis 5 zur Messung des Porenvolumens eines Katalysators eines Gesteins, eines Zements oder von keramischen Materialien.

**Claims**

1. Apparatus for determining the pore volume parameters of a solid sample comprising a substantially sealed high pressure cell (50) containing a chamber (10a), a sample holder (1) provided with a closure including a tube (21) which is open at its two extremities and of a suitable diameter, the sample holder being mounted in said chamber and communicating therewith via said tube, means (2) for creating a vacuum connected to said chamber, and means (8) for supplying a non wetting liquid such as mercury connected to the chamber, the apparatus being characterised in that it includes pump means (9) connected to the chamber and to the liquid supply means for delivering said liquid under pressure, means (40) connected to the pump for programming a steady supply rate over a set period of time, at least one pressure sensor (15) downstream of the pump means adapted to read the pressure continuously, and means (41) for signal collection and processing connected to the pressure sensor and to the means for programming the liquid supply, adapted to determine the pore volume parameters of the sample.

2. Apparatus according to claim 1 wherein the cell comprises two orifices (30, 14b), one of which (30) provides communication between the chamber and the pump means, and closure (14) including tube (14a) which is adapted either to bring the second orifice (14b) into communication with the chamber and an expansion chamber (13) for said liquid, or to close the second orifice.

3. Apparatus according to claim 1 wherein the cell comprises a single orifice (30) which brings the chamber (10a) into communication either with the pump means (4), or with the vacuum creating means (2), by means of an appropriate valve between the pump means and the orifice.

4. Apparatus according to any one of claims 1 to 3 wherein the sample holder comprises a ground glass closure (1a) including a small diameter tube (21) which is open at both its extremities, and support means in the chamber.

5. Apparatus according to any one of claims 1 to 4 wherein the pump means is a syringe pump.

6. Method for determining pore volume parameters of a solid sample by porosimetry, characterised in that the following steps are carried out:

a) an empty sample holder is filled with a non wetting liquid with a compressibility ratio which is less than or equal to that of mercury, such as mercury;

b) the sample holder is placed in a chamber in a high pressure cell, the chamber being in communication with the sample holder;

c) the high pressure cell chamber is filled with said liquid using a suitable pump means;

d) the filled chamber is isolated;

e) a substantially steady flow of said liquid is programmed and introduced into the cell chamber by the pump means for a set period of time, and the volume of liquid introduced is thereby continuously calculated;

f) the pressure corresponding to the volume of liquid introduced during said period is continuously measured;

g) the sample holder is emptied;

h) a known weight of a sample is introduced into the sample holder which is filled with said liquid;

i) the sample holder is placed in the high pressure cell chamber;

j) steps c), d) and e) are repeated in the presence of the sample in the sample holder;

k) the pressure corresponding to the volume of liquid introduced into the cell chamber containing the sample is continuously measured during said period; and

l) suitable processing means continuously determine the volume of liquid introduced into the sample per unit weight for each pressure measurement obtained from steps f) and k) and the pore volume parameters per unit weight of the sample are thereby calculated.

7. Method according to claim 6 wherein a steady flow of non wetting liquid into the high pressure cell chamber is programmed, both with and without the sample, to be at least $10^{-4}$ mm$^3$.s$^{-1}$, preferably between 1.5 x $10^{-3}$ mm$^3$.s$^{-1}$ and 1 mm$^3$.s$^{-1}$.

8. Method according to claim 6 or claim 7 wherein the pressure is measured at time intervals of less than 5 seconds, preferably less than 1 second.

9. Method according to any one of claims 6 to 8 wherein the non wetting liquid is mercury.

10. Method according to any one of claims 6 to 9 wherein the pump means is a syringe pump.

11. Use of an apparatus according to any one of claims 1 to 5 to determine the pore volume of a catalyst, rock, cement or ceramic material.

FIG.1

FIG.2

FIG.3

FIG.4

EP 0 653 619 B1